(19) Europäisches Patentamt
European Patent Office
Office européen des brevets

(11) **EP 3 979 163 B1**

(12) **FASCICULE DE BREVET EUROPEEN**

(45) Date de publication et mention
de la délivrance du brevet:
**23.08.2023 Bulletin 2023/34**

(21) Numéro de dépôt: **21197850.7**

(22) Date de dépôt: **20.09.2021**

(51) Classification Internationale des Brevets (IPC):
**G06Q 10/0631** *(2023.01)* **H02J 3/00** *(2006.01)*
**H02J 3/32** *(2006.01)* **G06Q 50/06** *(2012.01)*

(52) Classification Coopérative des Brevets (CPC):
**G06Q 10/06315; G06Q 50/06; H02J 3/004;**
**H02J 3/32;** H02J 2203/20; H02J 2300/22;
Y02E 40/70; Y02E 60/00; Y04S 10/50; Y04S 40/20

(54) **OPTIMISATION DE L'ENERGIE DISPONIBLE DANS UN MINI-GRID**

OPTIMIERUNG DER IN EINEM MINI-NETZ VERFÜGBAREN ENERGIE

OPTIMISATION OF THE ENERGY AVAILABLE IN A MINI-GRID

(84) Etats contractants désignés:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priorité: **05.10.2020 FR 2010160**

(43) Date de publication de la demande:
**06.04.2022 Bulletin 2022/14**

(73) Titulaire: **Sagemcom Energy & Telecom SAS**
**92500 Rueil-Malmaison (FR)**

(72) Inventeurs:
• **BILLET, Claire**
**92500 RUEIL MALMAISON (FR)**
• **HJIEJ, Amine**
**92500 RUEIL MALMAISON (FR)**

(74) Mandataire: **Lavaud, Thomas**
**Cabinet Boettcher**
**5, rue de Vienne**
**75008 Paris (FR)**

(56) Documents cités:
**EP-A1- 3 422 519**

• ZIA MUHAMMAD FAHAD ET AL: "Energy
Management System for an Islanded
Renewables-based DC Microgrid", 2020 2ND
INTERNATIONAL CONFERENCE ON SMART
POWER & INTERNET ENERGY SYSTEMS
(SPIES), IEEE, 15 septembre 2020 (2020-09-15),
pages 543-547, XP033849333, DOI:
10.1109/SPIES48661.2020.9242919

• LUNA ADRIANA C ET AL:
"Mixed-Integer-Linear-Programming-Based
Energy Management System for Hybrid
PV-Wind-Battery Microgrids: Modeling, Design,
and Experimental Verification", IEEE
TRANSACTIONS ON POWER ELECTRONICS,
INSTITUTE OF ELECTRICAL AND ELECTRONICS
ENGINEERS, USA, vol. 32, no. 4, 1 avril 2017
(2017-04-01), pages 2769-2783, XP011639828,
ISSN: 0885-8993, DOI:
10.1109/TPEL.2016.2581021 [extrait le
2017-01-23]

• WANG BO ET AL: "Interval Optimization Based
Coordination of Demand Response and Battery
Energy Storage System Considering SOC
Management in a Microgrid", IEEE
TRANSACTIONS ON SUSTAINABLE ENERGY,
IEEE, USA, vol. 11, no. 4, 20 mars 2020
(2020-03-20), pages 2922-2931, XP011809693,
ISSN: 1949-3029, DOI:
10.1109/TSTE.2020.2982205 [extrait le
2020-09-17]

• SOLANKI BHARATKUMAR V ET AL: "Integrated
energy management system for isolated
microgrids", 2016 POWER SYSTEMS
COMPUTATION CONFERENCE (PSCC), POWER
SYSTEMS COMPUTATION CONFERENCE, 20
juin 2016 (2016-06-20), pages 1-7, XP032944011,
DOI: 10.1109/PSCC.2016.7540832

Il est rappelé que: Dans un délai de neuf mois à compter de la publication de la mention de la délivrance du brevet
européen au Bulletin européen des brevets, toute personne peut faire opposition à ce brevet auprès de l'Office européen
des brevets, conformément au règlement d'exécution. L'opposition n'est réputée formée qu'après le paiement de la taxe
d'opposition. (Art. 99(1) Convention sur le brevet européen).

**Description**

DESCRIPTION

L'invention concerne le domaine de la distribution, à un réseau d'abonnés, d'énergie électrique issue de l'énergie solaire.

ARRIERE PLAN DE L'INVENTION

On assiste aujourd'hui, dans certains pays où le taux d'ensoleillement est important et où le réseau électrique traditionnel n'est pas accessible sur l'ensemble du territoire, au développement de *« mini-grids »* (que l'on peut traduire par « mini-réseaux électriques »), qui sont des réseaux alimentés électriquement par des stations de production autonomes qui transforment l'énergie solaire en énergie électrique. Les *mini-grids* sont donc isolés du réseau électrique traditionnel.

Un *mini-grid* comprend typiquement quelques dizaines à quelques milliers d'abonnés, qui appartiennent à un quartier, à un village ou à une petite ville.

Une station de production comporte classiquement une pluralité de panneaux solaires photovoltaïques, des batteries pour stocker l'énergie électrique produite à partir de l'énergie solaire, et divers équipements de puissance destinés à convertir et à distribuer l'énergie électrique.

Il est bien sûr fondamental d'optimiser la distribution de l'énergie électrique dans un *mini-grid,* de manière à augmenter la disponibilité de l'énergie électrique et à minimiser la durée de délestage des abonnés du réseau.

Il semble pour cela pertinent de tenir compte non seulement de la consommation réelle des abonnés, mais aussi des propriétés des batteries utilisées.

La plupart des solutions de l'art antérieur, liées au délestage des charges sur un réseau électrique et à l'optimisation de la production et de la distribution d'énergie, peuvent se répartir en deux familles.

Une première famille comprend des solutions (pouvant être des algorithmes ou des architectures) qui permettent de surveiller un réseau, et notamment la tension et la fréquence sur le réseau, mais aussi éventuellement de prédire l'évolution de ces grandeurs, et de prendre des décisions de délestage pour protéger l'intégrité de la source de production et garantir une disponibilité de l'énergie pour les autres charges, selon des arbres de décision.

Une deuxième famille comprend des solutions (pouvant être là encore des algorithmes ou des architectures) s'appliquant à des réseaux électriques avec plusieurs systèmes de production et de stockage de l'énergie, et visant à maintenir la disponibilité de l'énergie tout en minimisant le coût de production.

Dans la première famille, on connaît par exemple une solution qui consiste à utiliser un modèle de prédiction des tensions sur une ligne en fonction de l'état des commandes sur cette ligne, afin de prendre une décision de délestage. Cette solution prédit des lois de tension dans un réseau multi-sources et multi-consommation, en fonction de l'état des entrées et des sorties. Elle ne répond donc pas à la problématique d'optimisation de l'énergie distribuée dans un *mini-grid.*

On connaît aussi une méthode d'application de délestage en fonction des tensions mesurées en sortie d'une station de production d'énergie électrique. Cette solution se base sur une mesure de la tension de sortie afin d'appliquer un délestage, notamment en cas de déséquilibre du réseau. Elle ne répond donc pas non plus à la problématique d'optimisation de l'énergie distribuée dans un *mini-grid.*

Dans la deuxième famille, on connaît une méthode d'optimisation de la fourniture d'énergie sur un réseau dans le cas où il y a plusieurs sources. L'optimisation consiste à augmenter la disponibilité de l'énergie, tout en utilisant les sources d'énergie les moins coûteuses à un instant t. Ici, la variable que l'on cherche à optimiser est le coût de production de l'énergie. Cette solution ne répond donc pas à la problématique dont il est ici question.

En résumé, les solutions de l'art antérieur concernant les problématiques du délestage et de l'optimisation de la distribution d'énergie ne répondent pas au contexte des *mini-grids,* et ne prennent généralement en compte ni la consommation réelle des abonnés ni les propriétés des batteries utilisées. L'optimisation est généralement associée au coût de production, et le délestage à un mauvais comportement d'une charge.

Des exemples d'art antérieur sont donnés dans "Energy Management System for an Islanded Renewables-based DC Microgrid" (Zia Muhammad Fahad et al., 2020), ou dans "Mixed-Integer-Linear-Programming-Based Energy Management System for Hybrid PV-Wind-Battery Microgrids: Modeling, Design, and Expérimental Vérification" (Luna Adriana C et al., 2017).

OBJET DE L'INVENTION

L'invention a pour objet d'optimiser la distribution d'énergie électrique dans un réseau de type *mini-grid* alimenté par l'énergie solaire.

**EP 3 979 163 B1**

RESUME DE L'INVENTION

En vue de la réalisation de ce but, on propose un procédé de distribution à un réseau d'au moins un abonné d'une énergie électrique produite par une station de production comprenant au moins un panneau solaire et au moins une batterie, ledit réseau étant isolé du réseau électrique traditionnel, le procédé de distribution comportant, pour un jour donné qui comprend une journée suivie d'une nuit, les étapes d'optimisation, mises en oeuvre préalablement au jour donné, de :

- définir une quantité d'énergie pour le jour donné, qui est une quantité d'énergie maximale autorisée pour les abonnés ;
- prédire un état de charge final, égal à un état de charge de la batterie à la fin de la nuit du jour donné, ainsi qu'une extra-énergie fictive, l'extra-énergie fictive étant une énergie qui ne serait pas produite par le panneau solaire au cours de la journée du jour donné mais qui pourrait être produite si une consommation des abonnés et/ou une demande d'énergie de la batterie augmentent ;
- adapter la quantité d'énergie en fonction de l'état de charge final et de l'extra-énergie fictive ;

le procédé de distribution comprenant en outre, suite aux étapes d'optimisation, l'étape de faire distribuer aux abonnés du réseau, au cours du jour donné, la quantité d'énergie.

Le procédé de distribution permet donc d'optimiser la quantité d'énergie distribuée aux abonnés du réseau. Cette optimisation est particulièrement efficace, car elle tient compte à la fois des prévisions météorologiques, des capacités et des variations de l'état de charge des batteries, et des habitudes de consommation des abonnés du réseau.

On propose de plus un procédé de distribution tel que précédemment décrit, dans lequel la quantité d'énergie comprend une quantité d'énergie diurne destinée être distribuée au cours de la journée du jour donné, et une quantité d'énergie nocturne destinée à être distribuée au cours de la nuit du jour donné.

On propose de plus un procédé de distribution tel que précédemment décrit, dans lequel l'adaptation de la quantité d'énergie comprend les étapes de vérifier si l'extra-énergie fictive appartient à un intervalle d'énergie prédéterminé et, si ce n'est pas le cas, d'augmenter ou de réduire la quantité d'énergie diurne, puis de prédire à nouveau l'état de charge final et l'extra-énergie fictive, et de répéter ces étapes jusqu'à ce que l'extra-énergie fictive appartienne à l'intervalle d'énergie prédéterminé.

On propose de plus un procédé de distribution tel que précédemment décrit, dans lequel l'adaptation de la quantité d'énergie comprend les étapes de vérifier si l'état de charge final appartient à un intervalle de charge prédéterminé et, si ce n'est pas le cas, d'augmenter ou de réduire la quantité d'énergie nocturne, puis de prédire à nouveau l'état de charge final et l'extra-énergie fictive, et de répéter ces étapes jusqu'à ce que l'état de charge final appartienne à l'intervalle de charge prédéterminé.

On propose de plus un procédé de distribution tel que précédemment décrit, dans lequel la prédiction de l'état de charge final et de l'extra-énergie fictive met en oeuvre un ensemble d'algorithmes de prédiction coopérant les uns avec les autres, l'ensemble d'algorithmes de prédiction utilisant comme entrées un état de charge initial égal à l'état de charge de la batterie au début de la journée du jour donné, des prévisions météorologiques et la consommation des abonnés au cours du jour précédant le jour donné.

On propose de plus un procédé de distribution tel que précédemment décrit, dans lequel l'état de charge final et l'extra-énergie fictive sont prédits, préalablement au jour donné, pour le jour donné et pour un ou plusieurs jours suivant le jour donné.

On propose de plus un procédé de distribution tel que précédemment décrit, dans lequel l'ensemble d'algorithmes de prédiction comprend un algorithme de prédiction de la demande d'énergie de la batterie, un algorithme de prédiction d'un gisement solaire, un algorithme de prédiction de la consommation des abonnés, et un algorithme de prédiction de l'évolution de l'état de charge de la batterie.

On propose de plus un procédé de distribution tel que précédemment décrit, dans lequel l'algorithme de prédiction de la demande d'énergie de la batterie utilise comme entrée l'état de charge initial.

On propose de plus un procédé de distribution tel que précédemment décrit, dans lequel l'algorithme de prédiction du gisement solaire utilise comme entrée les prévisions météorologiques.

On propose de plus un procédé de distribution tel que précédemment décrit, dans lequel l'algorithme de prédiction du gisement solaire met en œuvre un algorithme d'apprentissage supervisé permettant de produire une estimation d'une irradiance à partir de laquelle est calculé le gisement solaire.

On propose de plus un procédé de distribution tel que précédemment décrit, dans lequel l'algorithme de prédiction de la consommation des abonnés utilise comme entrée la consommation des abonnés au cours du jour précédant le jour donné.

On propose de plus un procédé de distribution tel que précédemment décrit, dans lequel l'algorithme de prédiction de l'évolution de l'état de charge de la batterie utilise comme entrées, pour prédire l'évolution de l'état de charge de la batterie pendant la charge de la batterie, la demande d'énergie de la batterie, le gisement solaire, et la consommation

3

des abonnés au cours de la journée du jour donné.

On propose de plus un procédé de distribution tel que précédemment décrit, dans lequel l'algorithme de prédiction de l'évolution de l'état de charge de la batterie utilise comme entrées, pour prédire l'évolution de l'état de charge de la batterie pendant la décharge de la batterie, la consommation des abonnés au cours de la nuit du jour donné, l'état de charge à la fin de la journée du jour donné et l'extra-énergie fictive.

On propose aussi un module de traitement dans lequel est mis en oeuvre le procédé de distribution tel que précédemment décrit.

On propose de plus un programme d'ordinateur comprenant des instructions qui conduisent le module de traitement tel que précédemment décrit à exécuter les étapes du procédé de distribution tel que précédemment décrit.

On propose en outre un support d'enregistrement lisible par ordinateur, sur lequel est enregistré le programme d'ordinateur tel que précédemment décrit.

L'invention sera mieux comprise à la lumière de la description qui suit d'un mode de mise en oeuvre particulier non limitatif de l'invention.

## BREVE DESCRIPTION DES DESSINS

Il sera fait référence aux dessins annexés, parmi lesquels :

[Fig. 1] la figure 1 représente une architecture d'électrification rurale dans laquelle est mise en oeuvre l'invention ;
[Fig. 2] la figure 2 est un graphique comprenant une courbe de gisement solaire et une courbe de puissance fournie par les panneaux solaires, entre lesquelles est définie une aire qui représente l'extra-énergie fictive ;
[Fig. 3] la figure 3 représente des étapes d'un algorithme principal mis en oeuvre dans le procédé de distribution selon l'invention ;
[Fig. 4] la figure 4 représente la manière dont coopèrent des algorithmes de prédiction mis en oeuvre dans le procédé de distribution selon l'invention ;
[Fig. 5] la figure 5 représente la prédiction de l'état de charge final et de l'extra-énergie fictive sur plusieurs jours ;
[Fig. 6] la figure 6 représente des étapes d'un algorithme de prédiction du gisement solaire ;
[Fig. 7] la figure 7 représente des étapes d'un algorithme de prédiction d'une demande d'énergie des batteries.

## DESCRIPTION DETAILLEE DE L'INVENTION

Le procédé de distribution selon l'invention est ici mis en oeuvre dans une solution « de bout en bout » d'électrification rurale, qui est utilisée pour alimenter électriquement les abonnés 1 d'un *mini-grid 2.*

L'architecture d'électrification rurale comporte une partie de supervision/configuration 3 et une partie de production/distribution 4.

La partie de supervision/configuration 3 comprend un centre de données client 5 (comprenant des serveurs), un centre d'opération 6 (comprenant des clients *web* pour se connecter au centre de données client 5), et une unité de traitement 7.

L'unité de traitement 7 comprend un module de collecte de prévisions météorologiques 8 et un module de traitement 10 dans lequel est mis en oeuvre l'invention.

L'unité de traitement 7 peut être tout composant ou système électronique permettant de traiter des données. L'unité de traitement 7 comprend par exemple un processeur, un microcontrôleur, ou bien un circuit logique programmable tel qu'un FPGA (pour *Field Programmable Gate Arrays)* ou un ASIC (pour *Application Spécifie Integrated Circuit).*

L'unité de traitement 7 comprend aussi des moyens de communication pour communiquer avec le centre de données client 5.

La partie de production/distribution 4 comporte une station de production 11.

La station de production 11 comprend des panneaux solaires photovoltaïques 12 (que l'on nommera ici « panneaux solaires ») et des onduleurs connectés aux panneaux solaires 12, ainsi que des batteries 14 et des onduleurs connectés aux batteries 14. Il serait bien sûr possible d'avoir un seul panneau solaire 12 et une seule batterie 14.

La station de production 11 comprend aussi un générateur diesel 15, dont le fonctionnement a un coût élevé. L'invention permet de diminuer l'utilisation du générateur diesel 15 en optimisant au mieux l'utilisation de l'énergie des panneaux solaires 12 et des batteries 14. On note que la présence du générateur diesel est optionnelle, et que certaines stations de production n'en comportent pas.

La partie de production/distribution 4 comprend aussi un contrôleur de production 17, un contrôleur de distribution 18, un concentrateur 19 et des compteurs 20 qui permettent de mesurer l'énergie électrique consommée par les abonnés 1 du *mini-grid* 2. Les compteurs 20 communiquent avec le concentrateur 19 via une communication selon la norme RS-485. Le concentrateur 19 communique avec le contrôleur de distribution 18 par courants porteurs en ligne (protocole G3-PLC).

Les architectures de la partie de supervision/configuration 3 et de la partie de production/distribution 4 pourraient bien sûr être différentes de celles décrites ici. Par exemple, en ce qui concerne la partie de production/distribution 4, celle-ci pourrait comprendre une pluralité de concentrateurs répartis sur le *mini-grid,* avec plusieurs compteurs par concentrateur. La partie de supervision/configuration 3 et la partie de production/distribution 4 communiquent entre elles en mettant en oeuvre en oeuvre un protocole TCP/IP sur un réseau de télécommunication 21 (réseau WAN).

La partie de supervision/configuration 3 envoie des données de configuration technique, comme les quantités d'énergie autorisées, à la partie de production/distribution 4.

La partie de production/distribution 4 collecte des données de production et de distribution, ainsi que des données abonnés, et les envoie à la partie de supervision/configuration 3.

Le module de traitement 10, dans lequel est mis en oeuvre l'invention, est donc agencé pour communiquer avec le contrôleur de distribution 18 via le centre de données client 5 et le réseau de télécommunication 21.

Le procédé de distribution selon l'invention utilise les données collectées et définit des quantités d'énergie à allouer aux abonnés 1 chaque jour.

Ici, on considère qu'un « jour » comprend une même journée entière et une même nuit entière, et donc débute au lever du soleil, c'est-à-dire par exemple à 5h ou à 6h du matin, pour s'achever 24 heures plus tard.

Les quantités d'énergie sont des données de configuration technique envoyées au contrôleur de distribution 18 de chaque *mini-grid* 2, qui pilote, chaque jour, la distribution de la quantité d'énergie appropriée aux abonnés 1 du *mini-grid 2.*

Le procédé de distribution selon l'invention permet de prédire des quantités d'énergie maximales autorisées dans le but d'éviter les *blackouts* (c'est-à-dire des pannes d'électricité impactant un nombre important d'abonnés). Le procédé de distribution selon l'invention peut estimer ces quantités d'énergie pour le jour suivant mais aussi pour plusieurs jours. Plus la prédiction est lointaine dans le temps, plus le facteur de confiance dans ces estimations de quantités d'énergie sera faible. Cette possibilité permet d'envoyer au contrôleur de distribution 18 plusieurs jours de configuration de quantité d'énergie, afin de toujours avoir une configuration définie en fonction des prévisions météorologiques même si la connexion entre la partie de supervision/configuration 3 et la partie de production/distribution 4 est coupée temporairement. En effet, il arrive souvent que les *mini-grids* 2 nouvellement électrifiés aient une mauvaise disponibilité des réseaux de télécommunication.

En journée, l'énergie électrique est fournie principalement par les panneaux solaires 12. Cette énergie électrique permet de répondre à la demande des abonnés 1 mais aussi de recharger les batteries 14 pour pouvoir utiliser cette énergie stockée durant la nuit. La consommation des abonnés 1 est prioritaire sur la charge des batteries 14, et il est donc possible, lorsque le temps est très nuageux, que la demande des abonnés 1 soit satisfaite mais que les batteries 14 ne se chargent pas. Si les batteries 14 ne se sont pas chargées en journée, alors il est possible qu'il manque de l'énergie la nuit pour répondre à la demande des abonnés 1. De plus, lorsque l'état de charge (ou SOC, pour *State of charge)* des batteries 14 passe sous un seuil de charge prédéterminé, on est en présence d'un *blackout* : la station de production 11 se coupe jusqu'à ce que l'état de charge des batteries 14 retrouve un niveau acceptable. Cette période peut durer plusieurs heures, durant lesquelles aucun abonné 1 ne peut avoir d'électricité. Il est donc très important d'optimiser les quantités d'énergie autorisées en amont aux abonnés 1 afin de préserver les batteries 14, les charger et permettre de garantir aux abonnés 1 une meilleure qualité de service.

Le contrôleur de distribution 18 a comme paramètres de configuration les quantités d'énergie autorisées pour les abonnés. Ainsi, une fois que les quantités d'énergie sont calculées par le module de traitement 10 pour la journée à venir, elles sont envoyées au centre de données client 5, qui se charge de les envoyer au contrôleur de distribution 18. Une nouvelle configuration sera envoyée chaque jour. Lorsque la consommation des abonnés atteint la quantité maximale autorisée sur une période définie, les abonnés sont délestés. L'énergie ne leur est plus distribuée jusqu'à la prochaine période configurée.

Le premier but de l'invention est de proposer une quantité d'énergie quotidienne en évitant d'avoir un *blackout.* Cela signifie que l'état de charge des batteries 14 ne doit pas passer sous le seuil de charge prédéterminé S%. Ici, on a :

$$S = 40.$$

Le seuil de charge prédéterminé de 40% permet de ne pas détériorer les batteries 14. Un état de charge de batterie inférieur ou égal à S% entraine une coupure de la station de production jusqu'à ce que les batteries 14 se chargent à nouveau et atteignent $(S+\Delta S)\%$.

$(S+\Delta S)\%$ est un paramètre configuré dans les batteries 14.

Ici, on a :

$$\Delta S = 10,$$

c'est-à-dire qu'après un *blackout,* la station de production 11 distribue à nouveau de l'énergie à partir de 50% d'état de charge.

Le second but de l'invention est d'améliorer la disponibilité d'énergie aux abonnés et, en particulier, d'utiliser l'extra-énergie fictive (si elle existe).

Au cours d'une journée ensoleillée, une certaine quantité d'énergie qui aurait pu être produite par les panneaux solaires 12 ne l'a pas été car la demande d'énergie par les abonnés 1 et les batteries 14 était insuffisante : il s'agit de l'extra-énergie fictive.

Pour un jour donné, l'extra-énergie fictive est donc une énergie non produite par les panneaux solaires 12 au cours du jour donné, mais qui aurait pu être produite si la consommation des abonnés 1 et/ou une demande d'énergie des batteries 14 avaient été plus importantes.

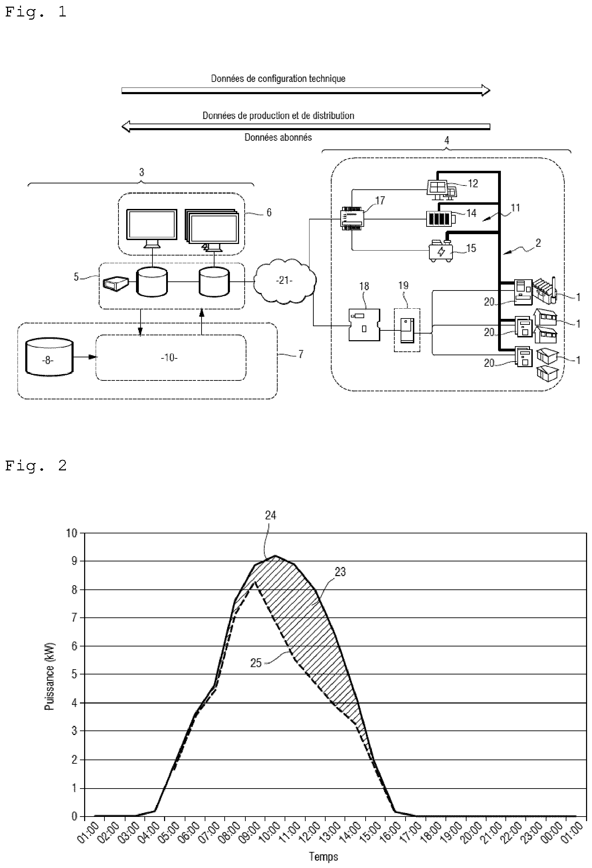

On illustre ce concept d'extra-énergie fictive en référence à la figure 2. Pour un jour donné, l'extra-énergie fictive 23 correspond à la différence entre le gisement solaire 24 du jour donné et la puissance 25 fournie par les panneaux solaires au cours du jour donné (et intégrée sur le jour donné). Autrement dit, on calcule l'extra-énergie fictive en soustrayant au gisement solaire les consommations des abonnés et la demande de recharge des batteries pour une journée.

Le second but de l'invention est donc d'augmenter les quantités d'énergie distribuées au cours des journées avec une présence d'extra-énergie fictive.

Le procédé de distribution définit donc une quantité d'énergie maximale disponible pour les abonnés afin que l'état de charge au lever du soleil suivant le jour donné ne passe pas sous un seuil de charge prédéterminé, de manière à éviter les *blackouts.* On estime aussi l'extra-énergie fictive. Avoir assez d'extra-énergie fictive permet de répondre à la demande des abonnés durant la journée, de répondre à la demande de recharge des batteries pour que les batteries soient suffisamment chargées, et de répondre à la demande des abonnés durant la nuit.

La quantité d'énergie comprend donc une quantité d'énergie diurne destinée être distribuée au cours de la journée du jour donné (lorsqu'il fait jour), et une quantité d'énergie nocturne destinée à être distribuée au cours de la nuit du jour donné.

On cherche à optimiser la quantité d'énergie diurne à partir de la valeur d'extra-énergie fictive. Pour cela, on augmente la quantité d'énergie diurne pour les abonnés si l'extra-énergie fictive est supérieure à un seuil d'énergie prédéterminé E (par exemple égal à 5kWh), ou bien on diminue cette quantité d'énergie diurne si l'extra-énergie fictive est négative. Lorsque la condition est respectée, on obtient une nouvelle quantité d'énergie diurne.

La nuit, la source d'énergie est les batteries. Le but est donc que l'état de charge final des batteries soit supérieur à S% au lever du soleil pour éviter tout *black*out. Pour cela, il faut diminuer ou augmenter la quantité d'énergie nocturne. Lorsque la condition est respectée, on obtient une nouvelle quantité d'énergie nocturne.

On décrit maintenant plus en détail la mise en oeuvre du procédé de distribution selon l'invention.

Pour chaque jour donné, le procédé de distribution comprend des étapes d'optimisation, mises en oeuvre préalablement au jour donné, et consistant à définir une quantité d'énergie pour le jour donné, puis à prédire l'état de charge final et l'extra-énergie fictive, et à adapter la quantité d'énergie en fonction de l'état de charge et de l'extra-énergie fictive. Le procédé de distribution consiste alors à faire distribuer aux abonnés du *mini-grid,* au cours du jour donné, la quantité d'énergie obtenue.

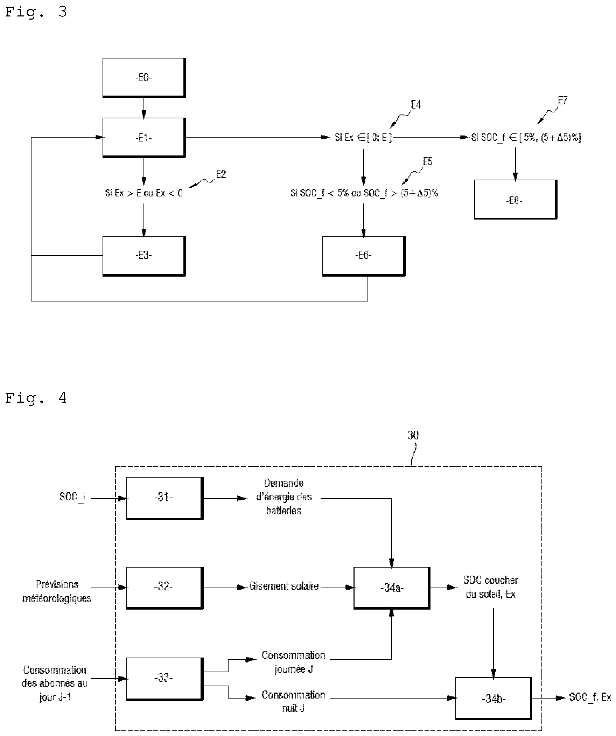

La mise en oeuvre du procédé de distribution comprend l'exécution d'un algorithme principal, dont les étapes sont visibles sur la figure 3.

L'algorithme principal utilise un ensemble d'algorithmes de prédiction pour prédire l'état de charge final et l'extra-énergie fictive.

Les algorithmes de prédiction ont en entrée la consommation potentielle des abonnés. Afin de déterminer l'évolution de la valeur d'extra-énergie fictive et la valeur de l'état de charge final en fonction des modifications de quantité d'énergie, on change cette valeur de consommation par une quantité correspondant à la quantité maximale estimée disponible pour les abonnés. On commence donc par initialiser l'algorithme principal en utilisant la quantité d'énergie qui est configurée par défaut dans le système, par exemple 50kWh. Puis, on modifie cette quantité d'énergie afin d'arriver dans les conditions d'arrêt de l'algorithme principal.

L'algorithme principal débute donc par une phase d'initialisation, au cours de laquelle une quantité d'énergie « par défaut » est définie (étape E0). La quantité d'énergie comprend une quantité d'énergie diurne et une quantité d'énergie nocturne.

La quantité d'énergie par défaut est par exemple égale à 50kWh, soit par exemple 30kWh pour la quantité d'énergie diurne et 20kWh pour la quantité d'énergie nocturne.

Les algorithmes de prédiction prédisent alors l'état de charge final SOC_f et l'extra-énergie fictive Ex pour le jour donné (étape E1).

L'adaptation de la quantité d'énergie consiste tout d'abord à vérifier si l'extra-énergie fictive appartient à un intervalle d'énergie prédéterminé et, si ce n'est pas le cas, à augmenter ou à réduire la quantité d'énergie diurne, puis à prédire à nouveau l'état de charge final et l'extra-énergie fictive, et à répéter ces étapes jusqu'à ce que l'extra-énergie fictive appartienne bien à l'intervalle d'énergie prédéterminé.

Ainsi, suite à la mise en oeuvre des algorithmes de prédiction, la condition suivante pour l'extra-énergie fictive Ex est vérifiée :

Ex E [0 ; E] ?
E est le seuil d'énergie prédéterminé.

Si la condition n'est pas vérifiée, et donc si :
Ex > E ou Ex < 0 (étape E2), alors l'algorithme principal passe à l'étape E3.
Au cours de l'étape E3, si :
Ex < 0, alors :

step E [0 ; 1[ et
Qed = Qed x step, où
Qed est la quantité d'énergie diurne et où
step est un premier facteur d'ajustement.

Dans ce cas, par exemple, step = 0,9.
Au cours de l'étape E3, si :
Ex > E, alors :
step E [1 ; 2[ et :
Qed = Qed x step.
Dans ce cas, par exemple, step = 1,1.
L'algorithme principal repasse alors à l'étape E1.
Ainsi, si l'extra-énergie fictive n'appartient pas à l'intervalle [0 ; E] et si l'extra-énergie fictive est négative strictement, la quantité d'énergie diurne est multipliée par un facteur compris entre 0 (inclus) et 1 (non inclus), ici égal à 0,9, et est donc réduite.
Si l'extra-énergie fictive n'appartient pas à l'intervalle [0 ; E] et si l'extra-énergie fictive est strictement supérieure au seuil d'énergie prédéterminé E, la quantité d'énergie diurne est multipliée par un facteur compris entre 1 (inclus) et 2 (non inclus), ici égal à 1,1, et est donc augmentée.
Ici, on a par exemple :

$$E = 5kWh.$$

Ainsi, si les algorithmes de prédiction prédisent une extra-énergie fictive strictement supérieure à 5kWh, alors il reste de l'énergie qui pourrait être utilisée, et donc la quantité d'énergie diurne est augmentée. La quantité d'énergie diurne devient égale à :

$$1,1*30 = 33kWh.$$

Suite à l'étape E3, l'algorithme principal repasse à l'étape E1 : avec la nouvelle quantité d'énergie diurne, les algorithmes de prédiction prédisent à nouveau une valeur d'extra-énergie fictive Ex et une valeur d'état de charge final SOC_f.
On vérifie à nouveau si la condition pour l'extra-énergie fictive est vérifiée :
Ex E [0 ; E] ?
Si elle n'est pas vérifiée, et donc si l'extra-énergie fictive n'appartient toujours pas à l'intervalle [0 ; E], le procédé de distribution repasse à l'étape E3.
Si la condition est vérifiée (étape E4), la quantité d'énergie diurne à distribuer est bien définie.
Il faut ensuite vérifier une condition sur l'état de charge final, à la fin de la nuit du jour donné (c'est-à-dire au lever du soleil suivant le jour donné).
L'adaptation de la quantité d'énergie consiste à vérifier si l'état de charge final appartient à un intervalle de charge prédéterminé et, si ce n'est pas le cas, à augmenter ou à réduire la quantité d'énergie nocturne, puis à prédire à nouveau l'état de charge final et l'extra-énergie fictive, et à répéter ces étapes jusqu'à ce que l'état de charge final appartienne à l'intervalle de charge prédéterminé.
Ainsi, la condition suivante pour l'état de charge final est vérifiée :

SOC_f E [S%; (S + ∆S)%] ?
SOC_f est l'état de charge final et S est un seuil de charge prédéterminé.

Ici, S = 40 et ∆S = 10.

Si la condition est vérifiée, et donc si l'état de charge final appartient à l'intervalle [S%; (S + ∆S)%] (étape E7), la quantité d'énergie est définie pour le jour donné et l'algorithme principal s'achève (étape E8).

Si la condition n'est pas vérifiée, et donc si l'état de charge final n'appartient pas à l'intervalle [S%; (S + ∆S)%], c'est-à-dire si :

SOC_f < S% ou SOC_f > (S + ∆S)% (étape E5), alors l'algorithme principal passe à l'étape E6.

Au cours de l'étape E6, si :

SOC_f < S%, alors :

step E [0; 1[ et :

Qen = Qen x step, où
Qen est la quantité d'énergie nocturne et
step est un deuxième facteur d'ajustement.

Dans ce cas, par exemple, step = 0,9.

Au cours de l'étape E6, si :

SOC_f > (S + ∆S)%, alors :

step E [1; 2[ et :

SOC_f = SOC_f x step.

Dans ce cas, par exemple, step = 1,1.

Ainsi, si l'état de charge final n'appartient pas à l'intervalle [S%; (S + ∆S)%] et si l'état de charge final est inférieur strictement au seuil de charge prédéterminé, la quantité d'énergie nocturne est multipliée par un facteur compris entre 0 (inclus) et 1 (non inclus), ici égal à 0,9, et est donc réduite. Si la prédiction de l'état de charge final est inférieure à 40%, la quantité d'énergie nocturne est diminuée :

0,9*20 = 18 kWh.

Si l'état de charge final n'appartient pas à l'intervalle [S%; (S + ∆S)%] et si l'état de charge final est strictement supérieur au seuil de charge prédéterminé plus 10%, soit 50%, la quantité d'énergie nocturne est multipliée par un facteur compris entre 1 (inclus) et 2 (non inclus), ici égal à 1,1, et est donc augmentée.

Suite à l'étape E6, l'algorithme principal repasse à l'étape E1 : avec la nouvelle quantité d'énergie, les algorithmes de prédiction prédisent à nouveau une valeur d'extra-énergie fictive et d'état de charge final.

On vérifie à nouveau si la condition pour l'extra-énergie fictive est vérifiée, puis, si c'est le cas, si la condition pour l'état de charge est vérifiée.

Lorsque la condition pour l'état de charge est vérifiée et donc que :

SOC_f E [S%; (S + ∆S)%] (étape E7),
la quantité d'énergie est définie pour le jour donné et l'algorithme principal s'achève (étape E8).

D'après cet exemple, la quantité d'énergie estimée disponible sera donc de 51kWh avec 33 kWh pour la journée et 18kWh pour la nuit.

On décrit maintenant l'ensemble d'algorithmes de prédiction utilisés pour prédire l'état de charge final et l'extra-énergie fictive.

La manière dont coopèrent ces algorithmes est illustrée sur la figure 4.

Quatre algorithmes de prédiction sont utilisés, qui coopèrent les uns avec les autres pour obtenir l'état de charge final et l'extra-énergie fictive.

L'ensemble d'algorithmes de prédiction 30 utilise comme entrées un état de charge initial SOC_i égal à l'état de charge de la batterie au début de la journée du jour donné, des prévisions météorologiques et la consommation des abonnés au cours du jour J-1 précédant le jour donné J. Les prévisions météorologiques peuvent être pour le jour donné J seulement ou bien, comme on le verra plus tard, pour tous les jours entre le jour donné J et le jour J+X, ce qui permet de définir les quantités d'énergie à distribuer pour plusieurs jours.

L'ensemble d'algorithmes de prédiction 30 comprend un algorithme de prédiction de la demande d'énergie des batteries 31, un algorithme de prédiction du gisement solaire 32, un algorithme de prédiction de la consommation des abonnés 33, et un algorithme de prédiction de l'évolution de l'état de charge des batteries 34a, 34b.

L'algorithme de prédiction de la demande d'énergie des batteries 31 utilise comme entrée l'état de charge initial.

L'algorithme de prédiction du gisement solaire 32 utilise comme entrée les prévisions météorologiques.

L'algorithme de prédiction de la consommation des abonnés 33 utilise comme entrée la consommation des abonnés au cours du jour J-1 précédant le jour donné J.

L'algorithme de prédiction de l'évolution de l'état de charge des batteries 34a utilise comme entrées, pour prédire l'évolution de l'état de charge des batteries pendant la charge des batteries, la demande d'énergie des batteries (prédite par l'algorithme de prédiction de la demande d'énergie des batteries 31), le gisement solaire (prédit par l'algorithme de prédiction du gisement solaire 32), et la consommation des abonnés au cours de la journée du jour donné (prédite par l'algorithme de prédiction de la consommation des abonnés 33).

L'algorithme de prédiction de l'évolution de l'état de charge des batteries 34b utilise comme entrées, pour prédire l'évolution de l'état de charge des batteries pendant la décharge des batteries, la consommation des abonnés au cours de la nuit du jour donné (prédite par l'algorithme de prédiction de la consommation des abonnés 33), l'état de charge au coucher du soleil du jour donné J et l'extra-énergie fictive Ex (prédits par l'algorithme de prédiction de l'évolution de l'état de charge des batteries 34a).

L'ensemble d'algorithmes de prédiction 30 permet ainsi de prédire l'état de charge final SOC_f et l'extra-énergie fictive Ex.

Ainsi, en connaissant la valeur de l'état de charge au lever du soleil, les prévisions météorologiques pour la journée et la consommation d'énergie des abonnés de la veille, on peut estimer, en utilisant les algorithmes de prédiction, la valeur du l'état de charge au lever du soleil le lendemain, 24h plus tard, et l'extra-énergie fictive. Cela permet d'estimer une valeur de l'état de charge et une valeur d'extra-énergie fictive lors de la mise en oeuvre de l'algorithme principal, et de les comparer aux valeurs de seuil.

Cette approche est particulièrement avantageuse, notamment parce que l'état de charge final et l'extra-énergie fictive peuvent être prédits, préalablement au jour donné J, pour le jour donné J mais aussi pour un ou plusieurs jours suivant le jour donné J.

Ainsi, en cas de perte de communication entre la partie de production/distribution et la partie de supervision/configuration, due par exemple à une perte de la connexion internet, il est tout de même possible de définir des quantités d'énergie optimisées pour les jours suivants le jour donné.

Le procédé de distribution peut donc fonctionner de manière autonome, c'est-à-dire sans connexion internet et donc sans recevoir de données, sur X jours.

A chaque nouvelle connexion internet, le système récupère donc les prévisions météorologiques pour les X prochains jours et estime une quantité d'énergie pour ces X jours.

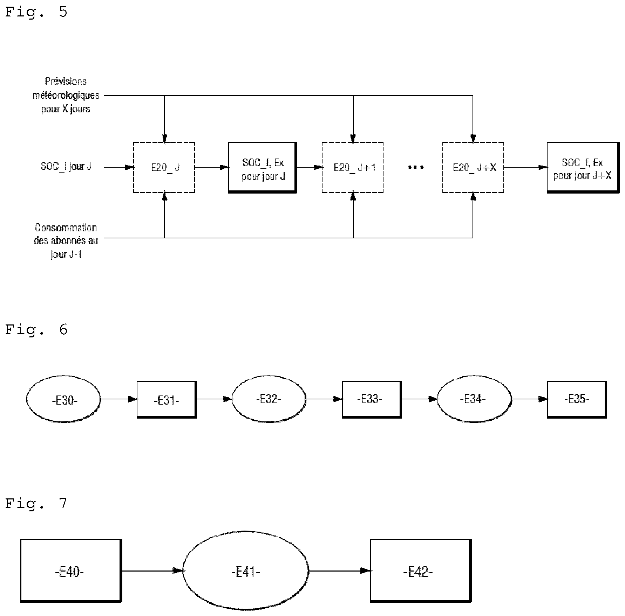

Ainsi, en référence à la figure 5, la mise en oeuvre de l'ensemble des algorithmes de prédiction permet d'évaluer l'état de charge final et l'extra-énergie fictive pour le jour donné J+X, et donc de définir les quantités d'énergies à distribuer jusqu'au jour J+X, à partir des prévisions météorologiques pour X jours, de l'état de charge initial du jour donné J, et de la consommation des abonnés au cours du jour J-1 précédant le jour donné J.

Les algorithmes de prédiction sont mis en oeuvre (étape E20_J) et permettent d'obtenir l'état de charge final et l'extra-énergie fictive pour le jour J à partir des prévisions météorologiques pour le jour J, de l'état de charge initial pour le jour J et de la consommation des abonnés au cours du jour J-1 précédant le jour J.

Les algorithmes de prédiction sont à nouveau mis en oeuvre (étape E20_J+1) et permettent d'obtenir l'état de charge final et l'extra-énergie fictive pour le jour J+1 à partir des prévisions météorologiques pour le jour J+1, de l'état de charge final pour le jour J et de la consommation des abonnés au cours du jour J.

Ces étapes sont répétées, de sorte que, finalement, les algorithmes de prédiction sont à nouveau mis en oeuvre (étape E20_J+X) et permettent d'obtenir l'état de charge final et l'extra-énergie fictive pour le jour J+X à partir des prévisions météorologiques pour le jour J+X, de l'état de charge final pour le jour J+X-1 et de la consommation des abonnés au cours du jour J+X-1.

On décrit maintenant chacun des algorithmes de prédiction.

L'algorithme de prédiction de la consommation des abonnés peut simplement consister à considérer que la consommation des abonnés au cours du jour donné est égale à la consommation des abonnés au cours du jour précédant le jour donné.

Il est aussi possible d'utiliser un algorithme d'apprentissage automatique (ou *machine learning,* en anglais) de type régression supervisée. Le but est de satisfaire au mieux les abonnés dans leur consommation d'énergie tout en respectant l'énergie disponible. Ainsi, en connaissant leur consommation à venir, cela permet de connaître la quantité d'énergie minimale que le système souhaite leur apporter.

L'algorithme de prédiction du gisement solaire fonctionne de la manière suivante.

Le gisement solaire est la puissance que les panneaux solaires peuvent produire selon les conditions météorologiques à un instant donné. Le gisement solaire dépend des caractéristiques des panneaux, de leur position, de la nébulosité, et de la saison et de l'heure, qui influent sur la hauteur du Soleil et donc sur l'énergie reçue par les panneaux.

Ici, chaque panneau solaire comprend un capteur d'irradiance et un capteur de température des cellules photvoltaïques. Grâce à ces deux capteurs et à la formule suivante, il est possible de calculer le gisement solaire :

$$gs = \frac{34}{100} \times (\frac{310 \times irr}{1000} - \frac{310 \times irr}{1000} \times \frac{0,42}{100} \times (tempPV - 25)),$$

où :

gs est le gisement solaire (en kW) ;
irr est la mesure d'irradiance produite par le capteur d'irradiance (en W/m$^2$) ;
tempPV est la mesure de température produite par le capteur de température des cellules photvoltaïques (en °C).

Il est donc possible de calculer le gisement solaire en temps réel. Un historiques de données de gisement solaire connus est donc disponible.

En référence à la figure 6, la prédiction du gisement solaire est réalisée de la manière suivante.

Des prévisions météorologiques pour le jour donné sont réalisées (étape E30). Une API de données météorologiques (par exemple *Open Weather Map)* est utilisée et permet de collecter des prévisions météorologiques heure par heure, comprenant par exemple la nébulosité (en %), la température, la vitesse du vent, les précipitations, la météo (jour ensoleillé, pluvieux, nuageux, etc.) : étape E31.

En utilisant ces données historiques de prévisions météorologiques et des valeurs connues de gisement solaire, on entraîne un algorithme d'apprentissage automatique (étape E32). Une fois ce modèle entraîné, avec des prévisions météorologiques, on prédit la valeur du gisement solaire pour la journée à venir.

L'algorithme d'apprentissage utilisé est un algorithme de type *XGBoost,* qui est un modèle d'apprentissage automatique de type régression supervisée, basé sur l'algorithme d'arbres de *boosting gradient.* Le *boosting gradient* est un algorithme d'apprentissage supervisé dont le principe est de combiner les résultats d'un ensemble de modèles simples et faibles afin d'obtenir une meilleure prédiction. On peut aussi utiliser une méthode ensembliste en couplant un *XGBoost* avec un réseau de neurones. Ces deux algorithmes sont entraînés indépendamment et, lors de la prédiction, il y a un vote pour choisir la meilleure prédiction. Un régresseur basé sur un vote fait la moyenne des prédictions individuelles, ici du réseau de neurones et du *XGboost,* pour former une prédiction finale.

L'algorithme d'apprentissage supervisé permet d'obtenir une estimation de l'irradiance (en W/m$^2$) pour le jour J (étape E33).

La formule du gisement solaire présentée plus haut est alors utilisée avec l'estimation de l'irradiance (étape E34). On calcule ainsi le gisement solaire au jour J (étape E35) .

La méthode présentée permet d'obtenir des valeurs de gisement solaire à la granularité horaire.

L'algorithme de prédiction de la demande d'énergie des batteries fonctionne de la manière suivante.

La demande de recharge d'une batterie est l'énergie demandée par la batterie pour se recharger.

Les sources d'énergie dans la solution présentée ici sont les panneaux solaires et les batteries. Les batteries sont la seule source d'énergie pour la nuit, et donc il est nécessaire qu'elles puissent se charger suffisamment en journée grâce à l'énergie solaire pour pouvoir fournir de l'énergie la nuit.

La nuit, cette puissance est négative, les batteries se déchargent. Durant la journée, la puissance est positive, les batteries se chargent.

Pour répondre à la demande de recharge d'une batterie, il faut un modèle permettant de déterminer l'énergie que les panneaux solaires doivent fournir à celle-ci pour que l'état de charge atteigne 100%, en connaissant l'état de charge au lever du soleil. Les journées dites de « *clear sky* » (que l'on peut traduire par « ciel clair ») sont des journées pendant lesquelles la production des panneaux solaires est maximale, l'énergie produite est très souvent supérieure à la demande des abonnés, et l'état de charge de la batterie atteint 100%.

En référence à la figure 7, l'algorithme consiste donc à acquérir l'état de charge initial égal à l'état de charge de la batterie au lever du soleil du jour donné (par exemple à 6h du matin - étape E40), à mettre en oeuvre un modèle de régression linéaire (étape E41), et à déterminer la quantité d'énergie (en kWh) nécessaire à la charge de la batterie à partir d'une valeur donnée d'état de charge (étape E42).

L'algorithme de prédiction de l'évolution de l'état de charge des batteries fonctionne de la manière suivante.

A partir des valeurs de l'état de charge initial et de l'énergie fournie à la batterie, on trouve une relation entre un point d'état de charge et l'énergie fournie aux batteries, cette relation est obtenue avec un algorithme d'apprentissage automatique, une régression linéaire en l'occurrence.

L'évolution de l'état de charge et l'énergie nécessaire pour cette évolution de l'état de charge ont une relation linéaire. Avec une valeur d'état de charge au lever du soleil et une demande d'énergie de la batterie en entrée du modèle, on calcule la variation de l'état de charge sur cette journée, lorsque la batterie se charge.

De même, on entraîne un algorithme d'apprentissage automatique, une régression linéaire en l'occurrence, pour obtenir un modèle qui détermine la variation de l'état de charge lorsque la batterie fournit de l'énergie à partir d'une valeur d'état de charge au coucher du soleil.

On utilise donc deux modèles permettant de connaître la variation de l'état de charge de la batterie, l'un applicable en journée (pour prédire l'évolution de l'état de charge des batteries pendant la charge des batteries) et l'autre applicable la nuit (pour prédire l'évolution de l'état de charge des batteries pendant la décharge des batteries).

Bien entendu, l'invention n'est pas limitée au mode de réalisation décrit mais englobe toute variante entrant dans le champ de l'invention telle que définie par les revendications.

## Revendications

1. Procédé de distribution à un réseau (2) d'au moins un abonné (1) d'une énergie électrique produite par une station de production (11) comprenant au moins un panneau solaire (12) et au moins une batterie (14), ledit réseau étant isolé du réseau électrique traditionnel, le procédé de distribution comportant, pour un jour donné qui comprend une journée suivie d'une nuit, les étapes d'optimisation, mises en oeuvre préalablement au jour donné, de :

   - définir une quantité d'énergie pour le jour donné, qui est une quantité d'énergie maximale autorisée pour les abonnés ;
   - prédire un état de charge final (SOC_f), égal à un état de charge de la batterie à la fin de la nuit du jour donné, ainsi qu'une extra-énergie fictive (Ex), l'extra-énergie fictive étant une énergie qui ne serait pas produite par le panneau solaire au cours de la journée du jour donné mais qui pourrait être produite si une consommation des abonnés et/ou une demande d'énergie de la batterie augmentent ;
   - adapter la quantité d'énergie en fonction de l'état de charge final et de l'extra-énergie fictive ;

   le procédé de distribution comprenant en outre, suite aux étapes d'optimisation, l'étape de faire distribuer aux abonnés du réseau, au cours du jour donné, la quantité d'énergie.

2. Procédé de distribution selon la revendication 1, dans lequel la quantité d'énergie comprend une quantité d'énergie diurne destinée être distribuée au cours de la journée du jour donné, et une quantité d'énergie nocturne destinée à être distribuée au cours de la nuit du jour donné.

3. Procédé de distribution selon la revendication 2, dans lequel l'adaptation de la quantité d'énergie comprend les étapes de vérifier si l'extra-énergie fictive (Ex) appartient à un intervalle d'énergie prédéterminé et, si ce n'est pas le cas, d'augmenter ou de réduire la quantité d'énergie diurne, puis de prédire à nouveau l'état de charge final et l'extra-énergie fictive, et de répéter ces étapes jusqu'à ce que l'extra-énergie fictive appartienne à l'intervalle d'énergie prédéterminé.

4. Procédé de distribution selon la revendication 2, dans lequel l'adaptation de la quantité d'énergie comprend les étapes de vérifier si l'état de charge final (SOC_f) appartient à un intervalle de charge prédéterminé et, si ce n'est pas le cas, d'augmenter ou de réduire la quantité d'énergie nocturne, puis de prédire à nouveau l'état de charge final et l'extra-énergie fictive, et de répéter ces étapes jusqu'à ce que l'état de charge final appartienne à l'intervalle de charge prédéterminé.

5. Procédé de distribution selon l'une des revendications précédentes, dans lequel la prédiction de l'état de charge final et de l'extra-énergie fictive met en oeuvre un ensemble d'algorithmes de prédiction (30) coopérant les uns avec les autres, l'ensemble d'algorithmes de prédiction utilisant comme entrées un état de charge initial (SOC_i) égal à l'état de charge de la batterie au début de la journée du jour donné, des prévisions météorologiques et la consommation des abonnés au cours du jour précédant le jour donné.

6. Procédé de distribution selon la revendication 5, dans lequel l'état de charge final (SOC_f) et l'extra-énergie fictive (Ex) sont prédits, préalablement au jour donné, pour le jour donné et pour un ou plusieurs jours suivant le jour donné.

7. Procédé de distribution selon la revendication 5, dans lequel l'ensemble d'algorithmes de prédiction (30) comprend un algorithme de prédiction de la demande d'énergie de la batterie (31), un algorithme de prédiction d'un gisement solaire (32), un algorithme de prédiction de la consommation des abonnés (33), et un algorithme de prédiction de l'évolution de l'état de charge de la batterie (34a, 34b).

8. Procédé de distribution selon la revendication 7, dans lequel l'algorithme de prédiction de la demande d'énergie de la batterie utilise comme entrée l'état de charge initial (SOC_i).

9. Procédé de distribution selon la revendication 7, dans lequel l'algorithme de prédiction du gisement solaire utilise comme entrée les prévisions météorologiques.

10. Procédé de distribution selon la revendication 8, dans lequel l'algorithme de prédiction du gisement solaire met en oeuvre un algorithme d'apprentissage supervisé permettant de produire une estimation d'une irradiance à partir de laquelle est calculé le gisement solaire.

11. Procédé de distribution selon la revendication 7, dans lequel l'algorithme de prédiction de la consommation des abonnés utilise comme entrée la consommation des abonnés au cours du jour précédant le jour donné.

12. Procédé de distribution selon la revendication 7, dans lequel l'algorithme de prédiction de l'évolution de l'état de charge de la batterie utilise comme entrées, pour prédire l'évolution de l'état de charge de la batterie pendant la charge de la batterie, la demande d'énergie de la batterie, le gisement solaire, et la consommation des abonnés au cours de la journée du jour donné.

13. Procédé de distribution selon la revendication 7, dans lequel l'algorithme de prédiction de l'évolution de l'état de charge de la batterie utilise comme entrées, pour prédire l'évolution de l'état de charge de la batterie pendant la décharge de la batterie, la consommation des abonnés au cours de la nuit du jour donné, l'état de charge à la fin de la journée du jour donné et l'extra-énergie fictive (Ex).

14. Module de traitement (10) dans lequel est mis en oeuvre le procédé de distribution selon l'une des revendications précédentes.

15. Programme d'ordinateur comprenant des instructions qui conduisent le module de traitement selon la revendication 14 à exécuter les étapes du procédé de distribution selon l'une des revendications 1 à 13.

16. Support d'enregistrement lisible par ordinateur, sur lequel est enregistré le programme d'ordinateur selon la revendication 15.

**Patentansprüche**

1. Verfahren zur Verteilung von elektrischer Energie, die von einer Erzeugungsstation (11) erzeugt wird, an ein Netz (2) von mindestens einem Abnehmer (1), wobei die Erzeugungsstation (11) mindestens ein Solarpanel (12) und mindestens eine Batterie (14) umfasst, wobei das genannte Netz vom herkömmlichen Stromnetz isoliert ist, wobei das Verteilungsverfahren für einen gegebenen vollen Tag, der einen Tag gefolgt von einer Nacht umfasst, die Optimierungsschritte umfasst, die vor dem gegebenen vollen Tag durchgeführt werden:

   - Definieren einer Energiemenge für den gegebenen vollen Tag, die eine maximale Energiemenge ist, die für die Abnehmer zugelassen wird;
   - Vorhersagen eines endgültigen Ladezustands (SOC_f), der gleich einem Ladezustand der Batterie am Ende der Nacht des gegebenen vollen Tages ist, sowie einer fiktiven Extraenergie (Ex), wobei die fiktive Extraenergie eine Energie ist, die nicht von dem Solarpanel während des Tages des gegebenen vollen Tages erzeugt würde, aber die erzeugt werden könnte, wenn ein Verbrauch der Abnehmer und/oder ein Energiebedarf der Batterie zunehmen;
   - Anpassen der Energiemenge in Abhängigkeit von dem endgültigen Ladezustand und der fiktiven Extraenergie;

   wobei das Verteilungsverfahren ferner, nach den Optimierungsschritten, den Schritt umfasst, die Energiemenge an die Abnehmer des Netzes während des gegebenen vollen Tages verteilen zu lassen.

2. Verteilungsverfahren nach Anspruch 1, bei dem die Energiemenge eine Tag-Energiemenge umfasst, die dazu bestimmt ist, während des Tages des gegebenen vollen Tages verteilt zu werden, und eine Nacht-Energiemenge, die dazu bestimmt ist, während der Nacht des gegebenen vollen Tages verteilt zu werden.

3. Verteilungsverfahren nach Anspruch 2, bei dem die Anpassung der Energiemenge die Schritte umfasst: Verifizieren, ob die fiktive Extraenergie (Ex) zu einem vorbestimmten Energieintervall gehört, und, wenn dies nicht der Fall ist, Erhöhen oder Verringern der Tag-Energiemenge, und dann erneutes Vorhersagen des endgültigen Ladezustands und der fiktiven Extraenergie, und Wiederholen dieser Schritte, bis die fiktive Extraenergie zu dem vorbestimmten Energieintervall gehört.

4. Verteilungsverfahren nach Anspruch 2, bei dem die Anpassung der Energiemenge die Schritte umfasst: Verifizieren, ob der endgültige Ladezustand (SOC_f) zu einem vorbestimmten Ladeintervall gehört, und, wenn dies nicht der Fall ist, Erhöhen oder Verringern der Nacht-Energiemenge, und dann erneutes Vorhersagen des endgültigen Ladezustands und der fiktiven Extraenergie und Wiederholen dieser Schritte, bis der endgültige Ladezustand zu dem vorbestimmten Ladeintervall gehört.

5. Verteilungsverfahren nach einem der vorhergehenden Ansprüche, bei dem die Vorhersage des endgültigen Ladezustands und der fiktiven Extraenergie einen Satz von Vorhersagealgorithmen (30) implementiert, die miteinander zusammenwirken, wobei der Satz von Vorhersagealgorithmen als Eingaben einen anfänglichen Ladezustand (SOC_i), der gleich dem Ladezustand der Batterie zu Beginn des Tages des gegebenen vollen Tages ist, meteorologische Vorhersagen und den Verbrauch der Abnehmer während des vollen Tages, der dem gegebenen vollen Tages vorausgeht, verwendet.

6. Verteilungsverfahren nach Anspruch 5, bei dem der finale Ladezustand (SOC_f) und die fiktive Extraenergie (Ex) vorhergesagt werden, vor dem gegebenen vollen Tag, für den gegebenen vollen Tag und für einen oder mehrere gegebene volle Tage, die auf den gegebenen vollen Tag folgen.

7. Verteilungsverfahren nach Anspruch 5, bei dem der Satz von Vorhersagealgorithmen (30) einen Algorithmus zur Vorhersage des Energiebedarfs der Batterie (31), einen Algorithmus zur Vorhersage einer Sonneneinstrahlung (32), einen Algorithmus zur Vorhersage des Verbrauchs der Abnehmer (33) und einen Algorithmus zur Vorhersage der Entwicklung des Ladezustands der Batterie (34a, 34b) umfasst.

8. Verteilungsverfahren nach Anspruch 7, bei dem der Algorithmus zur Vorhersage des Energiebedarfs der Batterie als Eingabe den anfänglichen Ladezustand (SOC_i) verwendet.

9. Verteilungsverfahren nach Anspruch 7, bei dem der Algorithmus zur Vorhersage der Sonneneinstrahlung als Eingabe die meteorologischen Vorhersagen verwendet.

10. Verteilungsverfahren nach Anspruch 8, bei dem der Algorithmus zur Vorhersage der Sonneneinstrahlung einen Algorithmus für überwachtes Lernen einsetzt, der ein Erzeugen einer Schätzung einer Bestrahlungsstärke ermöglicht, anhand der die Sonneneinstrahlung berechnet wird.

11. Verteilungsverfahren nach Anspruch 7, bei dem der Algorithmus zur Vorhersage des Verbrauchs der Abnehmer als Eingabe den Verbrauch der Abnehmer während des vollen Tages verwendet, der dem gegebenen vollen Tag vorausgeht.

12. Verteilungsverfahren nach Anspruch 7, bei dem der Algorithmus zur Vorhersage der Entwicklung des Ladezustands der Batterie als Eingaben, zum Vorhersagen der Entwicklung des Ladezustands der Batterie während des Ladens der Batterie, den Energiebedarf der Batterie, die Sonneneinstrahlung und den Verbrauch der Abnehmer während des Tages des gegebenen vollen Tages verwendet.

13. Verteilungsverfahren nach Anspruch 7, bei dem der Algorithmus zur Vorhersage der Entwicklung des Ladezustands der Batterie als Eingaben, zum Vorhersagen der Entwicklung des Ladezustands der Batterie während des Entladens der Batterie, den Verbrauch der Abnehmer während der Nacht des gegebenen vollen Tages, den Ladezustand am Ende des Tages des gegebenen vollen Tages und die fiktive Extraenergie (Ex) verwendet.

14. Verarbeitungsmodul (10), in dem das Verteilungsverfahren nach einem der vorhergehenden Ansprüche durchgeführt wird.

15. Computerprogramm, umfassend Anweisungen, die das Verarbeitungsmodul nach Anspruch 14 veranlassen, die Schritte des Verteilungsverfahrens nach einem der Ansprüche 1 bis 13 auszuführen.

16. Computerlesbarer Aufzeichnungsträger, auf dem das Computerprogramm nach Anspruch 15 gespeichert ist.

**Claims**

1. Method for distribution to a network (2) of at least one customer (1) of electrical energy produced by a production station (11) comprising at least one solar panel (12) and at least one battery (14), said network being isolated from the traditional power grid, the distribution method comprising, for a given day comprising a daytime followed by a nighttime, the following optimisation steps implemented prior to the given day:

   - defining a quantity of energy for the given day, which is a maximum quantity of energy permitted for customers;
   - predicting a final state of charge ($SOC\_f$), equal to a state of charge of the battery at the end of the nighttime of the given day, as well as a fictitious energy surplus ($Ex$), the fictitious energy surplus being energy which would not be produced by the solar panel during the daytime of the given day but which could be produced if consumption of the customers and/or an energy demand of the battery increase;
   - adapting the quantity of energy depending on the final state of charge and the fictitious energy surplus;

   the distribution method also comprising, following the optimisation steps, the step of distributing the quantity of energy to customers of the network during the given day.

2. Distribution method according to claim 1, wherein the quantity of energy comprises a diurnal quantity of energy intended to be distributed during the daytime of the given day, and a nocturnal quantity of energy intended to be distributed during the nighttime of the given day.

3. Distribution method according to claim 2, wherein the adaptation of the quantity of energy comprises the steps of verifying if the fictitious energy surplus ($Ex$) falls within a predetermined energy range and, if this is not the case, increasing or decreasing the diurnal quantity of energy, then once again predicting the final state of charge and the fictitious energy surplus, and repeating these steps until the fictitious energy surplus falls within the predetermined energy range.

4. Distribution method according to claim 2, wherein the adaptation of the quantity of energy comprises the steps of verifying if the final state of charge ($SOC\_f$) falls within a predetermined charge range and, if this is not the case, increasing or decreasing the nocturnal quantity of energy, then once again predicting the final state of charge and the fictitious energy surplus, and repeating these steps until the final state of charge falls within the predetermined charge range.

5. Distribution method according to any of the preceding claims, wherein the prediction of the final state of charge and of the fictitious energy surplus implements a set of prediction algorithms (30) that cooperate with one another, the set of prediction algorithms using as inputs an initial state of charge ($SOC\_i$) equal to the state of charge of the battery at the start of the daytime of the given day, weather predictions, and the consumption of the customers during the day preceding the given day.

6. Distribution method according to claim 5, wherein the final state of charge ($SOC\_f$) and the fictitious energy surplus ($Ex$) are predicted, prior to the given day, for the given day and for one or more days following the given day.

7. Distribution method according to claim 5, wherein the set of prediction algorithms (30) comprises an algorithm for predicting the energy demand of the battery (31), an algorithm for predicting an insolation (32), an algorithm for predicting the consumption of the customers (33), and an algorithm for predicting the progression of the state of charge of the battery (34a, 34b).

8. Distribution method according to claim 7, wherein the algorithm for predicting the energy demand of the battery uses the initial state of charge ($SOC\_i$) as input.

9. Distribution method according to claim 7, wherein the algorithm for predicting the insolation uses the weather predictions as input.

10. Distribution method according to claim 8, wherein the algorithm for predicting the insolation implements a supervised learning algorithm that makes it possible to produce an estimation of an irradiance from which the insolation is calculated.

11. Distribution method according to claim 7, wherein the algorithm for predicting the consumption of the customers uses as input the consumption of the customers during the day preceding the given day.

12. Distribution method according to claim 7, wherein the algorithm for predicting the progression of the state of charge of the battery uses as inputs, for predicting the progression of the state of charge of the battery while the battery is being charged, the energy demand of the battery, the insolation, and the consumption of the customers during the daytime of the given day.

13. Distribution method according to claim 7, wherein the algorithm for predicting the progression of the state of charge of the battery uses as inputs, for predicting the progression of the state of charge of the battery while the battery is being discharged, the consumption of the customers during the nighttime of the given day, the state of charge at the end of the daytime of the given day and the fictitious energy surplus (Ex).

14. Processing module (10) in which the distribution method according to any of the preceding claims is implemented.

15. Computer program comprising instructions which prompt the processing module according to claim 14 to execute the steps of the distribution method according to any of claims 1 to 13.

16. Computer-readable storage medium on which the computer program according to claim 15 is stored.

Fig. 1

Fig. 2

Fig. 3

Fig. 4

Fig. 5

Fig. 6

Fig. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **ZIA MUHAMMAD FAHAD et al.** *Energy Management System for an Islanded Renewables-based DC Microgrid,* 2020

- **LUNA ADRIANA C et al.** *Mixed-Integer-Linear-Programming-Based Energy Management System for Hybrid PV-Wind-Battery Microgrids: Modeling, Design, and Expérimental Vérification,* 2017